# FASCICULE DE BREVET EUROPEEN

(11) **EP 0 592 311 B1**
(45) Date de publication et mention de la délivrance du brevet: **05.06.1996**
(21) Numéro de dépôt: 93402459.7
(22) Date de dépôt: 06.10.1993
(51) Int. Cl.: F16B 2/22

(54) **Clip de fixation amovible et pivotante à manoeuvre manuelle, et dispositif de liaison le comportant**
Abnehmbarer und durch Handbetätigung schwenkbarer Befestigungsclip und diesen enthaltende Verbindungsvorrichtung
Fixing clip which is removable and pivoting by manual operation, and connecting device containing the same

(30) Priorité: 09.10.1992 FR 9212049; 01.03.1993 FR 9302329
(43) Date de publication de la demande: 13.04.1994
(73) Titulaire: BERTRAND FAURE AUTOMOBILE "B.F.A.", F-91300 Massy (FR)
(72) Inventeur: Doussot, François, F-88110 Raon l'Etape (FR); Stouvenel, Thierry, F-88210 Senones (FR); Aries, Jacky, F-88470 La Voivre (FR); Rapenne, Vincent, F-88000 Epinal (FR)
(74) Mandataire: Bérogin, Francis

(56) Documents cités:
- EP-A- 0 170 811
- FR-A- 1 293 660
- FR-A- 1 508 000
- FR-A- 2 166 911
- US-A- 4 646 998
- US-A- 5 127 219

## Description

L'invention concerne un clip de fixation à manoeuvre manuelle pour relier entre eux de manière amovible et pivotante deux éléments dont l'un porte le clip et l'autre une barrette d'ancrage, formant axe de pivot, destinée à coopérer avec le clip. Un tel clip est connu de FR-A-1 508 000.

Dans de nombreuses activités industrielles, on connait diverses applications, dans lesquelles un élément doit pouvoir être monté amovible sur un élément support, par une attache de fixation autorisant des mouvements relatifs de pivotement de l'élément et du support.

Il en est particulièrement ainsi dans l'industrie automobile: afin de faciliter les opérations d'entretien, de réparations, et même de montage initial, un élément tel qu'un hayon arrière basculant, appelé également cinquième porte, de véhicule automobile, pivotant en service sur le support que constitue la caisse du véhicule, doit être monté amovible sur cette caisse. L'amovibilité du montage d'un hayon pivotant sur un véhicule peut également permettre d'améliorer les conditions du chargement de ce véhicule.

De même, les constructeurs de véhicules automobiles ont, depuis quelques années, offert à leur clientèle la possibilité d'augmenter le volume disponible de rangement dans le coffre de certains véhicules, par rabattement du dossier des sièges ou de la banquette arrière de ces véhicules, et relèvement par pivotement et/ou enlèvement de l'assise de ces sièges ou de cette banquette arrière.

Cela a conduit au développement et à l'utilisation d'articulations relativement complexes, et donc coûteuses, notamment à charnières, comportant au moins deux pièces coopérant par pivotement relatif et fixées, par exemple, par vissage l'une sur la caisse du véhicule et l'autre sur l'armature de l'assise.

Il en résulte que toute opération de montage ou démontage de l'assise par l'utilisateur du véhicule nécessite la manoeuvre d'outils appropriés, tels qu'un tournevis.

De plus, le vissage en usine, lors de la première monte de l'assise sur le véhicule, est une opération augmentant le temps de montage, et donc un facteur d'augmentation des coûts de production.

Enfin, les parties coopérant à pivotement des articulations d'assise étant métalliques, ces articulations sont bruyantes en service, du fait du contact métal-métal entre leurs parties coopérantes.

Un but de l'invention est de proposer un mécanisme d'attache simple facilitant les interventions de montage et de démontage, par exemple de l'assise pivotante d'un siège arrière de véhicule, par l'utilisateur du véhicule, sans qu'il soit nécessaire d'utiliser d'outillage particulier.

Un second but de l'invention est de proposer un mécanisme d'attache simple permettant d'accélérer le montage en usine, en supprimant les temps de vissage.

Un autre but de l'invention est de proposer un tel mécanisme simple qui permet de supprimer les bruits en service, du fait des contacts entre les pièces en mouvement relatif.

A cet effet, l'invention a pour objet un clip de fixation à manoeuvre manuelle, du type précité, qui se caractérise en ce qu'il comprend d'une part, un corps relativement rigide présentant un premier logement destiné à recevoir la barrette d'ancrage et ouvert vers l'extérieur du corps par une première fente de pincement élastique s'élargissant vers l'extérieur du corps et délimitée entre deux lèvres du corps, dont une première est élastiquement flexible, et, d'autre part, un organe mobile entre une position de verrouillage et une position de déverrouillage de la barrette d'ancrage dans le premier logement, positions dont l'une est une position de repos et l'autre une position active de l'organe mobile qui est lié au corps par des moyens souples, et déplaçable manuellement au moins de sa position de repos, dans laquelle il est à l'extérieur du corps, à sa position active par engagement à force dans une fente de pincement élastique s'élargissant également vers l'extérieur du corps et également délimitée entre deux lèvres du corps dont l'une est ladite lèvre flexible, l'ensemble étant agencé de façon telle que l'engagement à force de la barrette dans la première fente de pincement élastique, lorsque l'organe mobile n'est pas en position active, peut repousser suffisamment la lèvre flexible pour autoriser l'introduction de la barrette dans le premier logement, dans une position autorisant un pivotement relatif du clip et de la barrette, et dans laquelle la barrette tend à être retenue par un retour élastique consécutif de la lèvre flexible, et qu'ensuite l'engagement à force de l'organe mobile dans la fente de pincement élastique qui le reçoit peut repousser suffisamment la lèvre flexible pour autoriser la venue de l'organe mobile dans sa position active, dans laquelle il tend à être retenu par un retour élastique consécutif de la lèvre flexible.

Un tel clip ou attache de fixation a pour avantage que l'intégration d'un organe mobile à la pièce d'articulation, constituée par le corps du clip, permet une manoeuvre manuelle par l'utilisateur, au montage comme au démontage du clip et de la barrette d'ancrage. Simultanément, les temps de montage et de démontage sont courts.

Dans une première forme de réalisation avantageuse, à verrouillage automatique de la barrette dans le premier logement lors de son entrée dans ce dernier, le corps présente un évidement central en U, dont le fond constitue le premier logement, et la lèvre flexible s'étend d'une première extrémité, raccordée à une paroi rigide du corps, à son autre extrémité, qui est libre, et est, en sa position de repos, inclinée de sorte que sa dite extrémité libre est dirigée vers la seconde lèvre de la première fente de pincement élastique et vers l'intérieur de l'évidement en direction du premier logement, de sorte qu'au passage de la barrette dans la première fente de pincement élastique, la lèvre flexible est repoussée vers la paroi et que son extrémité libre constitue, dans sa position de repos, un moyen de verrouillage s'opposant à la sortie de la barrette hors du premier logement, et en ce que l'organe mobile, au repos en position de verrouillage de la barrette, est déplacé dans sa position active, qui est une position de déverrouillage de la barrette, par engagement dans ladite première fente de pincement élastique de sorte qu'il repousse suffisamment la lèvre flexible vers la paroi pour que la barrette puisse s'engager, à partir du premier logement, entre les deux lèvres de ladite première fente de pincement élastique et soit ainsi autorisée à sortir du premier logement et du clip par glissement dans la première fente de pincement élastique.

Par contre, si l'on veut que le verrouillage de la barrette dans le premier logement ne soit obtenu que par le déplacement de l'organe mobile de sa position de repos à sa position active, dans une seconde forme de réalisation avantageuse, le corps présente un second logement destiné à recevoir l'organe mobile, et ouvert vers l'extérieur du corps par une seconde fente de pincement élastique, la première lèvre, élastiquement flexible, s'étendant sensiblement entre une seconde et une troisième lèvres du corps avec lesquelles elle délimite respectivement la première et la seconde fentes de pincement élastique, et l'organe mobile est au repos en position de déverrouillage de la barrette, et en position active logé dans le second logement dans une position de verrouillage de la barrette, de sorte que, par l'engagement à force de la barrette dans la première fente de pincement élastique et vers le premier logement, alors que l'organe mobile n'est pas dans le second logement, la barrette peut écarter suffisamment la lèvre flexible de la seconde lèvre pour entrer dans le premier logement, et qu'ensuite l'engagement à force de l'organe mobile dans la seconde fente de pincement élastique peut écarter suffisamment la lèvre flexible de la troisième lèvre pour autoriser l'introduction de l'organe mobile dans le second logement, dans sa position active dans laquelle il maintient la lèvre flexible dans une position telle qu'elle s'oppose rigidement à la sortie de la barrette hors du premier logement, ladite barrette ne pouvant sortir à force du premier logement par action sur la lèvre flexible qu'après la sortie à force de l'organe mobile hors du second logement.

Afin de faciliter la manoeuvre manuelle de l'organe mobile, ce dernier est avantageusement un barreau allongé et rigide, sensiblement parallèle à la direction axiale de chaque logement, et présente des extrémités longitudinales en saillie axialement de part et d'autre du corps du clip, et par lesquelles le barreau est déplaçable au moins de l'une à l'autre de ses positions.

Dans le même but de faciliter la manoeuvre du barreau, tout en permettant simultanément un excellent positionnement de ce barreau vis-à-vis du reste du clip, dans ses deux positions de repos et active, il est en outre avantageux que les moyens souples de liaison de l'organe mobile au corps comprennent deux languettes élastiquement déformables reliant chacune l'une des extrémités longitudinales de l'organe mobile au corps, de manière à former un cadre qui chevauche au moins une partie du clip.

Dans un mode de réalisation particulièrement avantageux, garantissant un bon fonctionnement du clip tout en permettant un excellent montage du clip sur l'élément auquel il doit être solidarisé, le corps rigide du clip a sensiblement la forme d'un profilé en U, dont les ailes, constituant l'une au moins des lèvres du corps, sont solidaires d'une base, dont la face interne délimite au moins en partie le premier logement, la face extérieure de ladite base présentant des portions tubulaires en saillie par rapport aux faces externes desdites ailes, portions formant queue d'aronde pour le montage du clip, et dont l'une est axialement prolongée par au moins une partie d'ancrage des moyens souples de liaison de l'organe mobile au corps du clip.

Un tel clip peut être réalisé en métal, mais, avantageusement, il est réalisé en une matière plastique, de préférence en polyamide, de façon à constituer une pièce d'articulation en matière plastique qui peut être interposée entre, d'une part, la barrette d'ancrage métallique, solidaire d'un support, tel qu'une embase d'assise de siège, et un élément tel qu'une patte métallique de l'armature de l'assise, qui est montée pivotante de manière relativement silencieuse sur la barrette d'ancrage par l'intermédiaire du clip en matière plastique.

A titre d'application préférentielle, l'invention a également pour objet un dispositif de liaison amovible et pivotante d'une assise relevable de siège de véhicule sur une embase liée à la caisse du véhicule, le dispositif comportant au moins une barrette d'ancrage destinée à être fixée sur l'un des deux éléments que sont l'embase et une armature de l'assise, et au moins un organe destiné à être fixé sur l'autre des deux éléments et monté amovible et pivotant sur la barrette d'ancrage, formant axe de pivot, et le dispositif de liaison selon l'invention se caractérise en ce que ledit organe est un clip tel que défini précédemment.

Avantageusement, la barrette d'ancrage est fixée rigidement sur la caisse du véhicule et le clip est fixé sur une patte d'armature de l'assise. De plus, cette fixation du clip est avantageusement obtenue par coulissement d'une partie de son corps, en queue d'aronde, dans un canal profilé ménagé dans la patte d'armature et se resserrant élastiquement autour du clip.

D'autres avantages et caractéristiques de l'invention ressortiront de la description donnée ci-dessous, à titre non limitatif, d'un exemple de réalisation d'un dispositif de liaison et d'un clip de fixation selon l'invention, en référence aux dessins annexés sur lesquels:
- les figures 1 et 2 sont des vues schématiques en élévation latérale d'une assise de siège arrière de véhicule automobile montée pivotante sur une embase, et représentée respectivement en position abaissée ou rabattue et en position relevée,
- la figure 3 est une vue en perspective d'un premier exemple de clip fixé sur une patte métallique d'armature de l'assise, le clip étant monté sur une barrette d'ancrage solidarisée à l'embase du siège arrière,
- la figure 4 est une vue de profil, en partie en coupe et en partie en élévation latérale, de l'ensemble représenté sur la figure 3,
- les figures 5 à 9 sont des vues en élévation latérale du clip et en coupe transversale de la barrette d'ancrage, représentant les positions relatives du clip et de la barrette dans différentes configurations d'utilisation, les figures 5, 6 et 7 correspondant à des étapes successives de montage, la figure 8 à une configuration d'anti-arrachement, et la figure 9 à une position de déverrouillage, permettant la sortie de la barrette hors du clip,
- la figure 10 est une vue en perspective d'un second exemple de clip destiné à être fixé sur une patte métallique d'armature de l'assise, pour être monté sur une barrette d'ancrage solidarisée à l'embase du siège arrière, et

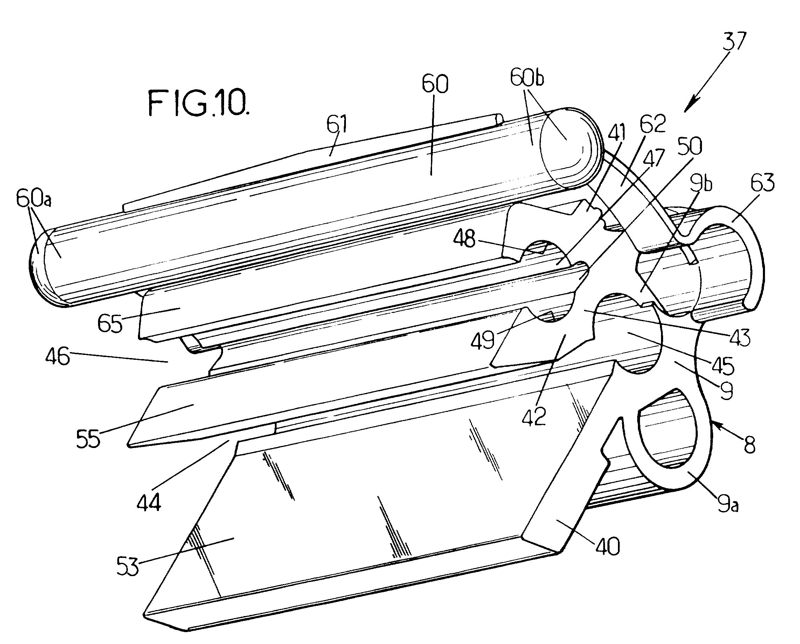

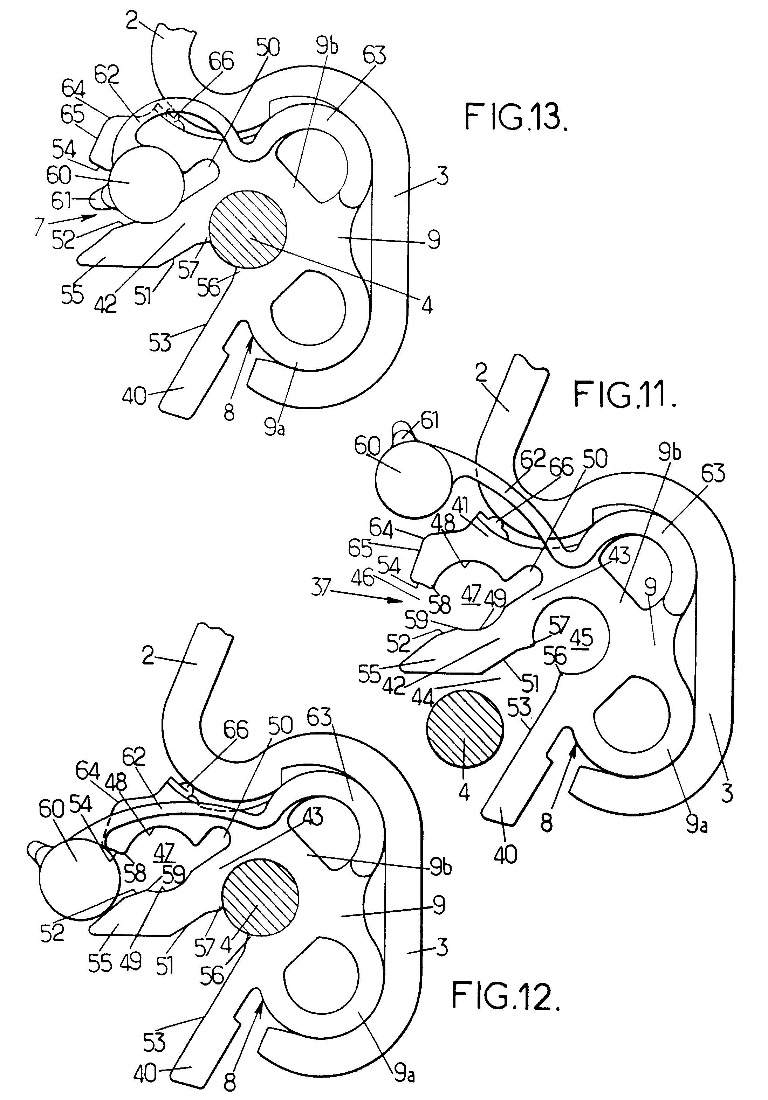

- les figures 11, 12 et 13 sont des vues en élévation latérale du clip de la figure 10 fixe sur une patte d'armature et en coupe transversale de la barrette d'ancrage avec laquelle le clip coopère, et représentent des positions relatives du clip et de la barrette dans différentes configurations d'utilisation, la figure 11 correspondant aux configurations avant montage et verrouillage et après démontage et déverrouillage, la figure 12 à une configuration barrette montée dans le clip et organe de verrouillage en position intermédiaire, entre ses positions de repos et de verrouillage, et la figure 13 à la configuration de montage et verrouillage.

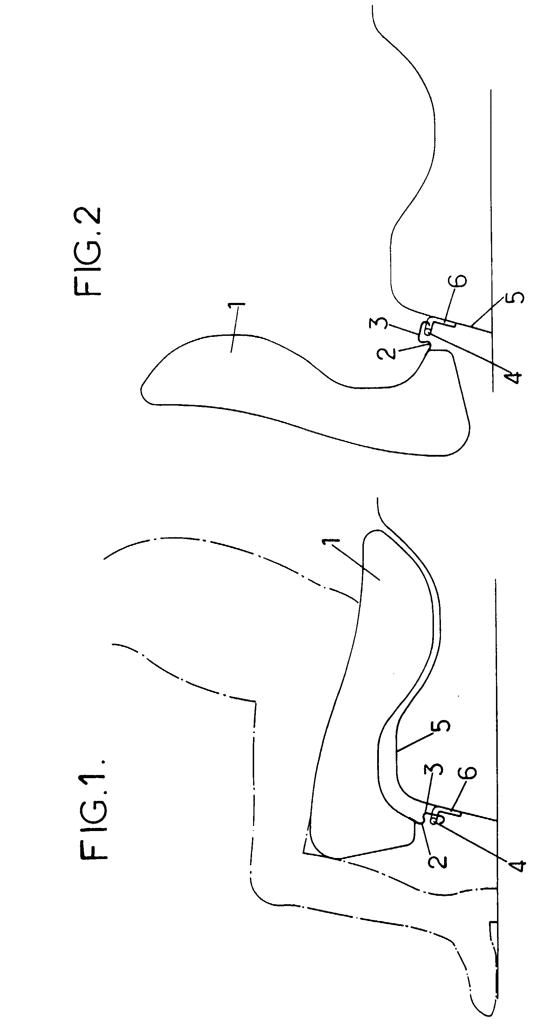

Sur les figures 1 et 2, on a représenté l'assise relevable et amovible d'un siège arrière de véhicule automobile, dont le dossier rabattable n'est pas représenté. Cette assise 1 comprend un coussin et une armature, qui comporte des pattes métalliques telles que 2, dont chacune présente, en saillie sous le coussin d'assise, une partie d'extrémité conformée en canal profilé 3 ayant une section transversale sensiblement en forme de "C", par laquelle chacune des pattes 2 est montée amovible et pivotante autour d'une barrette d'ancrage 4, formant un axe de pivot qui est transversal par rapport au plan longitudinal et vertical du véhicule et rigidement fixé sur une embase 5 de siège, elle-même solidaire de la caisse du véhicule. La barrette 4 est constituée d'un arceau métallique en "U" retourné dont les deux ailes sont coudées dans deux plans sensiblement perpendiculaires et forment des montants 6 rigidement liés à l'embase 5.

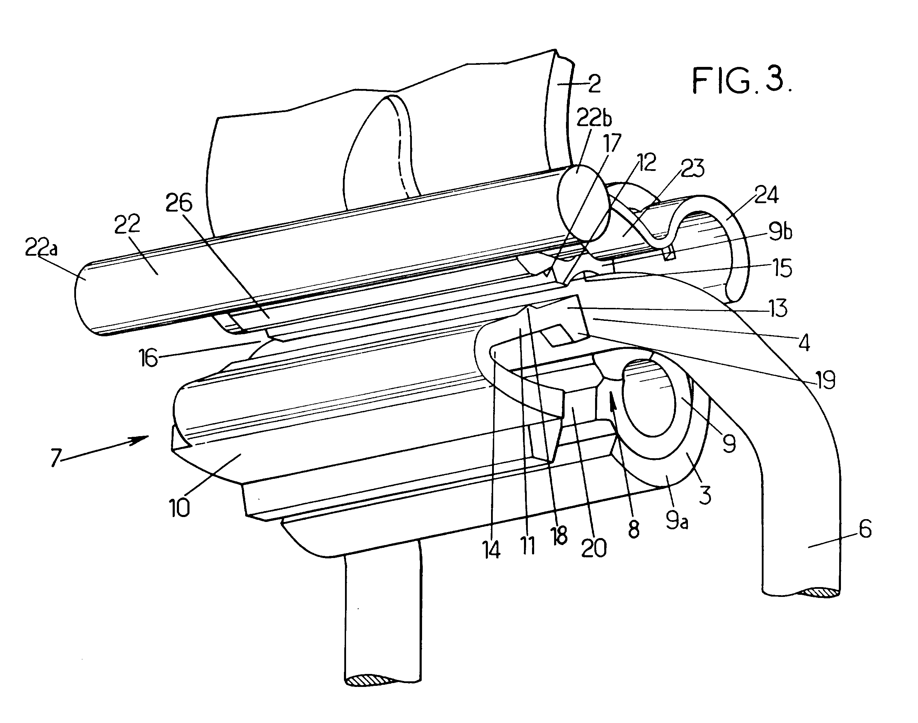

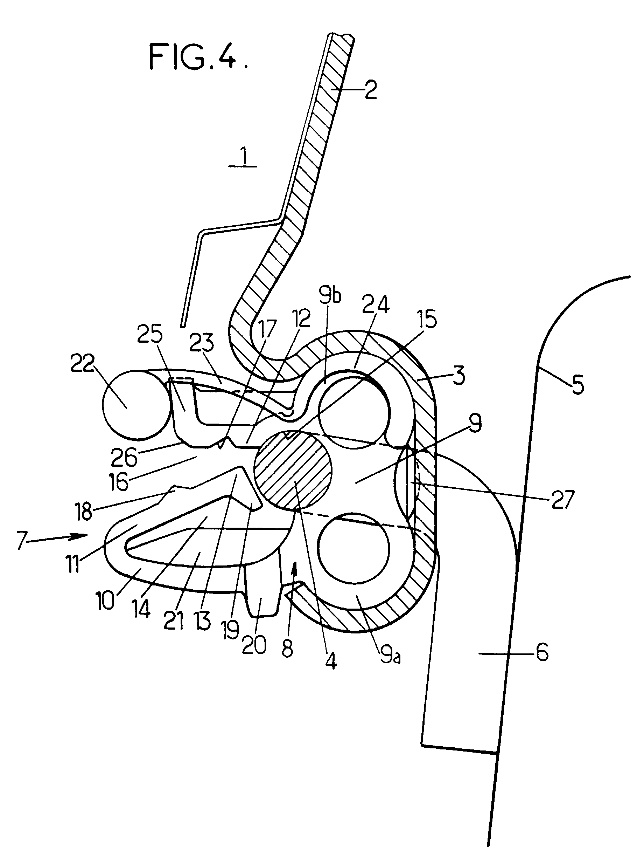

Chaque patte d'armature 2 est ainsi montée sur l'embase 5 par l'intermédiaire d'un dispositif de liaison amovible et pivotante comportant la barrette d'ancrage 4 et un organe d'articulation en matière plastique, qui n'est pas représenté sur les figures 1 et 2, mais qui est l'un ou l'autre des deux exemples décrits ci-dessous en référence aux figures 3 à 12, et qui est fixé de façon indémontable sur la patte 2 en étant monté en force dans son canal profilé en "C" 3 comme montré sur les figures 4 et 11 à 13. Cet organe d'articulation peut être monté autour de la barrette 4 et démonté de celle-ci par des manoeuvres manuelles, et, en position montée, peut librement tourner autour de la barrette 4. Ainsi, l'assise 1 peut être basculée de l'une à l'autre des deux positions des figures 1 et 2, qui sont respectivement une position abaissée, pour recevoir un passager dont la silhouette est schématiquement représentée en traits mixtes, et une position relevée, pour augmenter le volume de rangement disponible et pour monter l'assise 1 sur l'embase 5 ou la démonter de cette dernière.

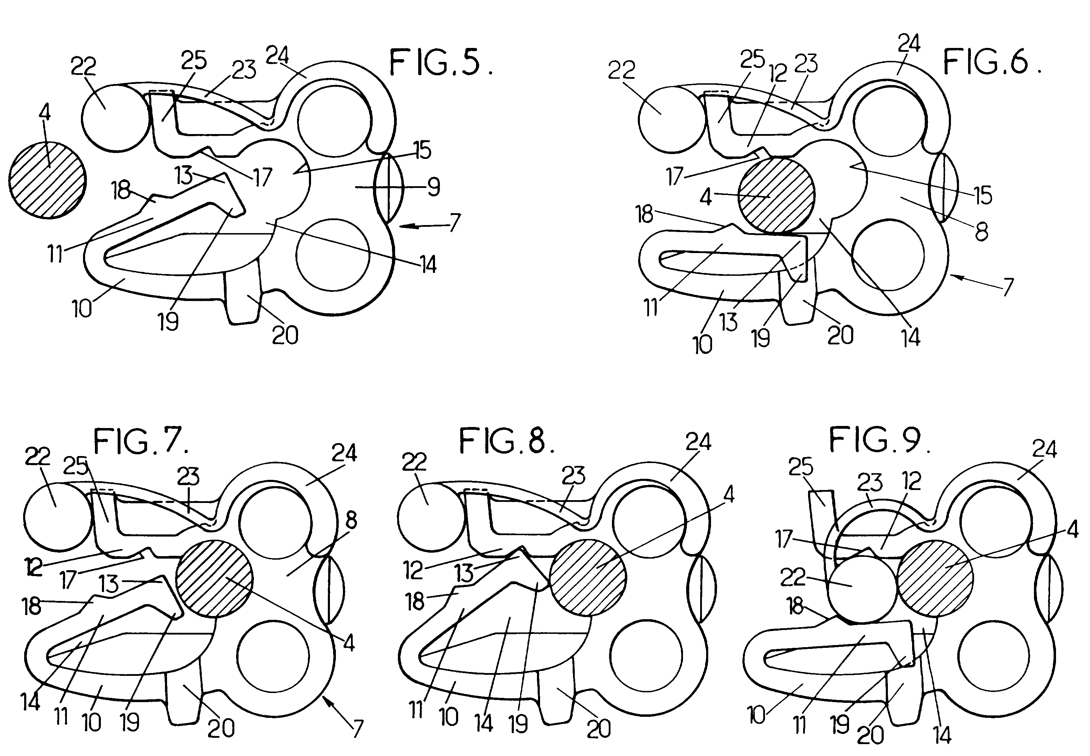

En référence aux figures 3 et 4, le premier exemple d'organe d'articulation est un clip 7 ou attache de fixation à manoeuvre manuelle qui comprend un corps relativement rigide 8 ayant sensiblement la forme d'un profilé en "U" dont la base 9 est constituée de deux portions de cylindre tubulaires adjacentes 9a, 9b lui donnant une section transversale sensiblement en forme de 8. Cette base 9 supporte les deux ailes du profilé en "U", qui s'étendent chacune à partir de l'une respectivement des portions tubulaires 9a et 9b, et dont l'une est une paroi rigide légèrement convexe 10, portant par son extrémité libre une lèvre flexible 11, l'autre aile étant une lèvre fixe 12 qui s'étend sensiblement parallèlement à la paroi 10. La lèvre flexible 11 s'étend de l'une de ses extrémités par laquelle elle est raccordée de manière élastiquement flexible à la paroi 10, à son autre extrémité 13 qui est libre. Dans sa position de repos, la lèvre flexible 11 est inclinée de sorte que son extrémité libre 13 soit dirigée vers la lèvre fixe 12 et vers l'intérieur d'un évidement central 14 sensiblement en forme de "U" délimité dans le corps 8, et dont le fond essentiellement formé par la face interne de la base 9 est en partie conformé en logement 15 en portion de cylindre de section circulaire (voir figures 5 et 6) apte à recevoir la barrette d'ancrage 4. L'inclinaison de la lèvre flexible 11 dans sa position de repos est telle que son extrémité libre 13 est en regard du logement 15, dont l'axe est parallèle à ceux des portions tubulaires de la base 9. Les deux lèvres 11 et 12 délimitent entre elles une fente de pincement élastique 16, par laquelle l'évidement 14 s'ouvre vers l'extérieur, et dont la largeur diminue de l'extérieur vers l'intérieur du logement 14. La lèvre fixe 12 présente dans sa face tournée vers la lèvre flexible 11 une rainure 17 de section en "V" s'ouvrant vers la lèvre flexible 11 et sensiblement parallèle à l'axe du logement 15. La lèvre flexible 11 présente en saillie sur sa face tournée vers la lèvre fixe 12 un ressaut 18 sensiblement parallèle à l'axe du logement 15. Sur un côté du clip 7 en direction axiale, l'extrémité libre 13 de la lèvre flexible 11 présente, en saillie vers la paroi 10, un talon de verrouillage 19 qui peut s'escamoter dans une lumière 20 ménagée en regard dans la paroi 10 sur le même côté du clip 7 lorsque la lèvre flexible 11 est fléchie vers la paroi 10. En direction axiale, sur le côté du clip 7 opposé à celui présentant la lumière 20, la paroi 10 présente une surépaisseur 21 qui rigidifie suffisamment l'extrémité de la lèvre flexible 11 liée à la paroi 10 et qui rend surtout flexible la partie de la lèvre flexible 11 adjacente à son extrémité libre 13, ce qui donne un bon positionnement de l'axe virtuel de rotation de la lèvre flexible 11.

Le clip 7 comprend également un organe mobile 22, qui est un barreau rigide allongé cylindrique de section circulaire sensiblement parallèle à l'axe du logement 15, et dont les extrémités longitudinales 22a, 22b font axialement saillie de part et d'autre du corps 8. Ce barreau 22 est lié au corps 8 par des moyens souples qui sont deux languettes 23 élastiquement déformables reliant chacune l'une des extrémités 22a, 22b du barreau 22 au corps 8 en formant avec ce dernier et avec le barreau 22 un cadre qui chevauche la lèvre fixe 12. Chaque languette 23 est rattachée au corps 8 par une partie d'ancrage 24 en arc de cercle qui prolonge axialement sur le côté correspondant celle 9b des deux portions tubulaires 9a, 9b de la base 9 à laquelle se rattache la lèvre fixe 12, et les languettes 23 rappellent élastiquement le barreau 22 dans sa position de repos corrrespondant à une position autorisant le verrouillage pour la barrette 4 dans le logement 15, et dans laquelle il est en butée contre un rebord externe 25 de la lèvre fixe 12, qui présente également, entre son rebord 25 et sa rainure 17, une rampe 26 formant chanfrein d'entrée dans la fente 16.

Par ses portions tubulaires 9a, 9b, la face externe de la base 9 du corps du clip est en saillie par rapport aux faces externes de la paroi 10 et de la lèvre fixe 12 de sorte que la base 9 présente une forme en queue d'aronde permettant le montage du clip 7 sur une patte 2 par coulissement du clip 7 selon la direction axiale du logement 15 dans le canal profilé 3 de la patte 2, qui se resserre élastiquement autour de la base 9 du corps du clip, l'arrêt en position centrée du clip 7 dans le canal 3 étant obtenu par exemple par deux ergots tels que 27 (dont un seul est représenté sur la figure 4) en saillie sur la face externe de la base 9 et se bloquant contre la patte 2, par exemple dans un évidement (non représenté sur la figure 4) ménagé dans le fond du canal 3.

Le clip 7, dont la structure et le montage sur la patte d'armature 2 de l'assise viennent d'être décrits, fonctionne de la manière suivante : au montage de l'assise 1 sur son embase 5, l'assise est présentée en position relevée, tel que montré sur la figure 2. La position relative de la barrette d'ancrage 4 et du clip 7 est celle représentée sur la figure 5, en considérant que le clip 7 est au-dessus de la barrette 4. Un appui vers le bas sur l'assise 1 déplace vers le bas le clip 7 de chaque patte 2 en direction de la barrette 4, qui est engagée à force dans la fente 16. Comme représenté sur la figure 6, la barrette 4 repousse élastiquement la lèvre flexible 11, qui fléchit vers la paroi 10, le talon 19 s'escamotant dans la lumière 20, et la barrette 4 peut pénétrer dans l'évidement central 14 du clip en passant au-delà du ressaut 18 et de la rainure 17. En fin de mouvement d'introduction, la barrette 4 est reçue dans le logement 15 (voir figure 7), dans une position qui autorise un pivotement relatif du clip 7 et de la barrette 4, formant axe de pivot, cette barrette 4 étant alors maintenue verrouillée dans cette position par le retour élastique de la lèvre flexible 11 dans sa position de repos, dans laquelle l'extrémité libre 13 et le talon de verrouillage 19 de cette lèvre flexible 11 s'opposent à la sortie de la barrette 4 hors de son logement 15. A noter que dans la position montée (figure 7), il subsiste un jeu fonctionnel entre, d'une part, la barrette 4, et, d'autre part, l'extrémité libre 13 et le talon 19 de la lèvre flexible 11, ce qui évite tout bruit parasite et permet la libre rotation du clip 7 autour de la barrette 4 sans que cette rotation n'entraîne un mouvement parasite de la lèvre 11 pouvant conduire à une libération accidentelle de la barrette 4. Dans cette position de la figure 7, l'assise 1 placée dans la position relevée nécessaire à son montage (figure 2) peut être rabattue en position d'utilisation de la figure 1. Par la suite, l'assise 1 peut être manipulée librement pour passer alternativement de l'une à l'autre des positions des figures 1 et 2.

Le démontage de l'assise est obtenu de la façon suivante : l'utilisateur étant assis sur le siège (voir la silhouette sur la figure 1), il peut, depuis cette position, se pencher et saisir manuellement le barreau 22 au repos, et en particulier ses extrémités qui sont en saillie axialement des deux côtés du clip 7 et de la patte d'armature 2. A partir de la position de repos du barreau 22, contre le rebord 25 de la lèvre fixe 12, l'utilisateur peut manuellement pousser le barreau 22 dans l'entrée de la fente de pincement élastique 16 en le faisant glisser le long de la rampe 26 de la lèvre 12, par déformation des languettes 23. De la même façon que la barrette 4, le barreau 22 peut être introduit dans la fente 16 en repoussant élastiquement la lèvre flexible 11 vers la paroi 10, jusqu'à atteindre une position active, dite de déverrouillage (voir figure 9) dans laquelle le barreau 22 prend appui dans la rainure 17 de la lèvre fixe 12 et derrière le ressaut 18 de la lèvre flexible 11, qui lui fournissent un appui stable et garantissent son maintien dans cette position, dans laquelle la lèvre flexible 11 est suffisamment écartée de la lèvre fixe 12 pour que la barrette 4 puisse s'engager entre les deux lèvres 11 et 12 et sortir de son logement 15, et donc du clip 7, par glissement dans la fente 16. La barrette 4 et le barreau 22 étant dans la position de la figure 9, l'utilisateur peut alors relever l'assise dans la position de la figure 2, sans que le barreau 22 ne quitte sa position de déverrouillage de la figure 9. L'assise 1 étant relevée, une simple traction exercée sur elle et vers le haut suffit à faire sortir la barrette 4 hors du clip 7 par glissement dans la fente 16, puisque le barreau 22 maintient la lèvre flexible 11 suffisamment écartée à cet effet. En sortant du clip 7, la barrette 4 repousse devant elle le barreau 22 qui, par un effet des languettes élastiquement déformables 23, est rappelé dans sa position de repos contre le rebord 25, comme représenté sur la figure 5. Le barreau 22 est donc déplacé de sa position active de déverrouillage vers sa position de repos par la barrette 4, lorsque cette dernière est dégagée de la fente de pincement élastique 16, à sa libération du clip 7.

A la fin de la manoeuvre de démontage, le clip 7 se retrouve dans la configuration représentée sur la figure 5, dans laquelle la lèvre flexible 11 et le barreau 22 occupent respectivement leur position de repos, c'est-à-dire que le clip 7 est prêt à être à nouveau monté sur une barrette 4, sans nécessiter une quelconque intervention manuelle.

Si, à partir de la position montée et apte au pivotement des figures 3, 4 et 7, l'utilisateur tente d'arracher ou de retirer l'assise 1 de son embase 5 sans effectuer préalablement la manoeuvre manuelle de mise du barreau 22 en position de déverrouillage comme décrit précédemment en référence à la figure 9, la lèvre flexible 11 commence par s'arc-bouter sous l'effort et oppose un effort résistant supérieur à l'effort normal de démontage. Si l'utilisateur persiste dans sa tentative d'arrachement, l'effort d'arrachement exercé par la barrette 4 sur la lèvre flexible 11 a pour effet de soulever cette lèvre 11 et de l'écarter de la paroi 10 jusqu'à ce que son extrémité libre 13 vienne en appui dans la rainure 17 de la lèvre fixe 12. Dans cette position d'ancrage de la lèvre flexible 11 contre la lèvre fixe 12 (voir figure 8), le talon 19 de la lèvre flexible 11 empêche la sortie de la barrette 4 hors de son logement 15. Dans cette configuration, l'arrachement de la barrette 4 hors du clip 7 nécessite des efforts très supérieurs à l'effort normal de démontage. Si toutefois l'utilisateur exerce ces efforts anormalement élevés et force sur la lèvre flexible 11 en appui dans la rainure 17, il peut sortir la barrette 4 du clip 7 en fléchissant et repoussant la lèvre flexible 11 vers l'extérieur et en la retournant sur elle-même, sans cependant la détruire du fait de sa flexibilité. Un remontage ultérieur du clip 7 sur la barrette 4 nécessite préalablement une opération manuelle de remise de la lèvre flexible 11 en position convenable, c'est-à-dire dans sa position de repos de la figure 5.

En référence aux figures 10 et 11, le second exemple d'organe d'articulation est un clip 37 à manoeuvre manuelle sur lequel on retrouve un corps rigide 8 ayant la forme d'un profilé en "U" à base 9 constituée de deux portions de cylindre tubulaires adjacentes 9a et 9b lui donnant une section transversale sensiblement en forme de 8. Cette base 9 supporte les deux ailes du profilé en "U", qui s'étendent chacune à partir de l'une respectivement des portions tubulaires 9a et 9b en s'écartant l'une de l'autre vers l'extérieur du U, et dont l'une est une lèvre rigide 40 sensiblement rectiligne, solidaire de la portion tubulaire 9a, et l'autre une lèvre rigide 41 de forme sensiblement convexe vers l'extérieur et solidaire de la portion tubulaire 9b. Une lèvre flexible 42 s'étend entre les lèvres rigides 40 et 41 en étant raccordée de manière élastiquement flexible à la portion tubulaire 9b par une partie d'extrémité de liaison 43 qui s'amincit vers cette portion 9b pour former une zone charnière. La lèvre flexible 42 délimite avec la lèvre rigide 40 une fente 44 de pincement élastique, par laquelle un logement 45, apte à recevoir la barrette d'ancrage 4, s'ouvre vers l'extérieur du clip 37. Ce logement 45, en forme de portion de cylindre de section circulaire, est ménagé essentiellement dans la face interne de la base 9 et en partie délimité par une face concave de la zone charnière 43. Avec l'autre lèvre rigide 41, la lèvre flexible 42 délimite une autre fente 46 de pincement élastique, par laquelle un autre logement 47, sensiblement en forme de portion de cylindre de section circulaire, s'ouvre vers l'extérieur du clip 37. Ce logement 47 est délimité entre deux parties concaves 48 et 49 tournées l'une vers l'autre, dont l'une 48 est présentée par la face interne de la lèvre 41, en regard de la lèvre flexible 42, et l'autre 49 par la face de la lèvre flexible 42 en regard de la lèvre 41. Du côté opposé au logement 45, la zone charnière 43 est délimitée par un évidement 50 à fond arrondi, s'étendant à partir du logement 47, du côté opposé à la fente 46, et vers la portion tubulaire 9b. Dans sa position de repos, la lèvre flexible 42 est inclinée de sorte que les faces latérales planes 51 et 52 de sa partie centrale s'écartent progressivement et respectivement de la face interne plane 53 de la lèvre 40 et de la face plane 54 de la partie d'extrémité libre de la lèvre 41, de sorte que les fentes 44 et 46 s'élargissent progressivement des logements 45 et 47 vers l'extérieur du clip. De plus, la partie d'extrémité libre 55 de la lèvre flexible 42 est conformée en biseau vers l'extérieur du clip 37, et présente ainsi deux faces planes inclinées qui convergent l'une vers l'autre et vers l'extérieur du corps 8, et qui délimitent des chanfreins d'entrée dans les fentes 44 et 46 avec les parties respectivement en regard sur les faces 53 et 54 des lèvres 40 et 41. Les axes des évidements 45 et 47 sensiblement cylindriques et des portions tubulaires 9a et 9b sont sensiblement parallèles les uns aux autres. La lèvre rigide 40 présente, au niveau du raccordement de sa face interne 53 avec la paroi de l'évidement 45, un ressaut 56 en saillie vers la lèvre flexible 42 et sensiblement parallèle à la direction axiale du logement 45. De même, la lèvre flexible 42 présente, au raccordement entre la face plane 51 de sa partie centrale avec la face concave de sa zone charnière 43 qui délimite partiellement l'évidement 45, un ressaut 57 en saillie vers la lèvre fixe 40 et sensiblement parallèle à la direction axiale du logement 45. La lèvre fixe 40 peut, en variante, également comporter un autre ressaut axial, analogue au ressaut 56 mais en saillie sur la face 53 en direction du ressaut formé sur la lèvre flexible 42 par le raccordement de la face plane 51 de sa partie centrale avec la face inclinée qui la prolonge à son extrémité en biseau 55, ce ressaut sur la lèvre flexible 42 pouvant d'ailleurs être plus marqué. De manière analogue, sur l'autre lèvre fixe 41, le raccordement entre la face plane 54 de sa partie d'extrémité libre et la face concave 48 forme un ressaut 58, parallèle à l'axe du logement 47 et en saillie vers un ressaut axial parallèle moins marqué formé sur la lèvre flexible 42 par le raccordement des face concave 49 et plane 52.

Le clip 37 comprend également un organe mobile 60, qui est un barreau rigide allongé cylindrique de section circulaire, sensiblement parallèle à l'axe du logement 17, et dont les extrémités longitudinales 60a et 60b font axialement saillie de part et d'autre du corps 8. Ce barreau 60, raidi par une nervure axiale 61, est lié au corps 8 par des moyens souples qui sont deux languettes 62 élastiquement déformables reliant chacune l'une des extémités 60a et 60b du barreau 60 au corps 8, en formant avec ce dernier et avec le barreau 60 un cadre qui chevauche la lèvre fixe 41. Chaque languette 62 est rattachée au corps 8 par une partie d'ancrage 63 en arc de cercle, qui prolonge axialement sur le côté correspondant la portion tubulaire 9b de la base 9 à laquelle se rattache la lèvre fixe 41, et les languettes 62 tendent à rappeler élastiquement le barreau 60 dans sa position de repos, dans laquelle il permet le déverrouillage de la barrette 4 et est en butée contre un rebord externe 64 de la lèvre fixe 41, qui présente également une rampe 65 entre son rebord 64 et sa face 54 du chanfrein d'entrée dans la fente 46.

Comme pour le clip 7, par les portions tubulaires 9a et 9b, la face externe de la base 9 du corps du clip 37 est en saillie par rapport aux faces externes des lèvres fixes 40 et 41 de sorte que la base 9 présente une forme en queue d'aronde permettant le montage du clip 37 sur une patte 2 par coulissement du clip 7, selon la direction axiale des logements 45 et 46 et des portions tubulaires 9a et 9b, dans le canal profilé 3 de la patte 2, qui se resserre élastiquement autour de la base 9 du corps du clip, l'arrêt en position centrée du clip 37 dans le canal 3 étant obtenu par exemple à l'aide d'une nervure striée 66 s'étendant axialement sur le dos de la lèvre fixe 41, dans la partie de cette lèvre qui se rattache à la portion tubulaire 9b. Par son appui contre la portion de jonction du canal 3 au reste de la patte 2, la nervure striée 66 permet également de rigidifier la lèvre fixe 41 dans une position de léger resserrement du logement 47 par rapport au diamètre du barreau 60, destiné à être encliqueté élastiquement dans le logement 47, après insertion de la barrette d'ancrage 4 par encliquetage élastique dans le logement 45.

Le clip 37, dont la structure et le montage sur la patte d'armature 2 de l'assise viennent d'être décrits, fonctionne de la manière suivante : au montage de l'assise 1 sur son embase 5, l'assise est présentée en position relevée, tel que montré sur la figure 2. La position relative de la barrette d'ancrage 4 et du clip 37 est celle représentée sur la figure 11, en considérant que le clip 37 est au-dessus de la barrette 4. Un appui vers le bas sur l'assise 1 déplace vers le bas le clip 37 de chaque patte 2 en direction de la barrette 4, qui est engagée à force dans la fente 44. La barrette 4 repousse élastiquement la lèvre flexible 42, qui fléchit et pivote par sa zone charnière 43 vers l'autre lèvre fixe 41, ce qui ouvre la fente 44, puis la barrette 4 peut pénétrer dans l'évidement 45 en passant au-delà des ressauts 56 et 57, à la suite de quoi la lèvre flexible 42 revient vers sa position initiale, en direction de la lèvre fixe 40, de sorte que la barrette 4 est retenue dans le logement 45, comme représenté sur la figure 12, sans être cependant verrouillée dans ce logement 45, vis-à-vis d'un arrachement tendant à extraire la barrette 4 de ce logement. Dans le logement 45, la barrette 4 est dans une position autorisant un pivotement relatif du clip 37 et de la barrette 4, formant axe de pivot.

Pour empêcher toute libération accidentelle de la barrette 4, cette dernière est verrouillée en position dans le logement 45 à l'aide du barreau 60, déplacé de sa position de repos à l'extérieur du corps 8, comme montré sur la figure 11, jusqu'à sa position active, dite de verrouillage dans le logement 47. Ceci est obtenu en déplaçant le barreau 60 au-delà du rebord externe 64 et de la rampe externe 65 de la lèvre fixe 41, pour amener, par déformation élastique des languettes 62, le barreau 60 dans une position intermédiaire, représentée sur la figure 12, dans laquelle ce barreau 60 est dans le chanfrein d'entrée de la fente 46, en appui simultanément contre la face 54 de la lèvre 41 et contre la partie biseautée 55 de la lèvre flexible 42. Ce mouvement (de la position de la figure 11 à celle de la figure 12) est obtenu en déplaçant le barreau 60 autour de la partie d'extrémité libre de la lèvre fixe 41.

A partir de la position intermédiaire de la figure 12, l'engagement à force du barreau 60 dans la fente 46 permet d'écarter suffisamment la lèvre flexible 42 de la lèvre fixe 41 par flexion et déformation de la partie centrale et du biseau 55 de la lèvre flexible 42 vers l'autre lèvre fixe 40, jusqu'à permettre l'introduction du barreau 60 dans le logement 47, par insertion au-delà des ressauts 58 et 59. Lorsque le barreau 60 est dans le logement 47, le retour élastique consécutif de la lèvre flexible 42 le retient dans cette position, dans laquelle le barreau 60 empêche tout pivotement ou flexion de la lèvre flexible 42 par sa zone charnière 43, de sorte que le barreau 60 maintient cette lèvre 42 dans une position telle qu'elle s'oppose rigidement à l'ouverture de la fente 44, nécessaire à une sortie de la barrette 4 hors du logement 45. Le barreau 60 est alors dans sa position de verrouillage dans le logement 47, comme représenté sur la figure 13, et, par sa présence, maintient la lèvre flexible 42 dans une position qui emprisonne la barrette 4 dans le logement 45. Dans cette position de la figure 13, l'assise 1 placée dans la position relevée nécessaire à son montage (figure 2) peut être rabattue en position d'utilisation de la figure 1. Par la suite, l'assise 1 peut être manipulée librement pour passer alternativement de l'une à l'autre des positions des figures 1 et 2.

Eventuellement, le verrouillage par la manoeuvre manuelle du barreau 60 peut être effectué après rabattement de l'assise 1 en position d'utilisation de la figure 1, par pivotement autour de la barrette 4 introduite dans le logement 45.

Le démontage de l'assise est obtenu de la façon suivante : l'utilisateur étant assis sur le siège (voir la silhouette sur la figure 1), il peut, depuis cette position, se pencher et saisir manuellement les extrémités 60a et 60b du barreau de verrouillage 60 qui sont en saillie axialement des deux côtés du clip 37 et de la patte d'armature 2. A partir de la position de verrouillage du barreau 60 (voir figure 6), l'utilisateur peut manuellement pousser à force ce barreau 60 vers l'extérieur du logement 47 en ouvrant la fente de pincement élastique 46 par déformation de la lèvre élastique 42 vers la lèvre fixe 40, jusqu'à ce que le barreau 60 puisse quitter le logement 47 et glisser vers l'extérieur dans la fente 46, après passage des ressauts 58 et 59 suffisamment écartés. Depuis la position de verrouillage (figure 13), le barreau 60 est ainsi ramené dans la position intermédiaire de la figure 12, à partir de laquelle il peut être ramené dans la position de repos de la figure 11, par passage, par déformation élastique des languettes 62, autour de la partie d'extrémité libre de la lèvre fixe 41. Le barreau 60 étant dans la position de la figure 12 ou de la figure 11, alors que la barrette 4 est toujours dans le logement 45, l'utilisateur peut alors relever l'assise dans la position de la figure 2, et une simple traction exercée sur elle et vers le haut suffit alors à faire sortir à force la barrette 4 hors de son logement 45, par ouverture de la fente de pincement élastique 44 obtenue par flexion de la lèvre flexible 42 dans sa zone charnière 43, et passage de la barrette 4 au-delà des ressauts 56 et 57 suffisamment écartés, de sorte qu'en fin de manoeuvre de démontage, le clip 37, son barreau de verrouillage 60 et la barrette se retrouvent dans la configuration de la figure 11.

Ainsi, après insertion à force de la barrette 4 dans le logement 45, le verrouillage dans cette position est obtenu par l'insertion subséquente du barreau 60 dans le logement 47. Au démontage, la barrette 4 ne peut sortir à force du logement 45 par action sur la lèvre flexible 42 qu'après la sortie à force du barreau 60 hors du logement 47.

Pour que l'ensemble du clip 7 ou 37 soit agencé de manière à fonctionner de la façon décrite ci-dessus, il est indiqué de réaliser le clip 7 ou 37 en une matière plastique ayant de bonnes propriétés d'élasticité, de sorte à bénéficier des fonctions élastiques nécessaires au bon fonctionnement du clip par la matière elle-même, sans nécessiter d'organes additionnels, tels que des ressorts métalliques. De préférence, le clip 7 ou 37 est réalisé en polyamide naturel, bien que d'autres matières plastiques soient également utilisables. Le clip 7 ou 37 en matière plastique, interposé entre une barrette d'ancrage métallique 4 et une patte d'armature métallique 2, garantit de plus un glissement sans bruit sur des pièces métalliques, et évite tout contact métal-métal, de sorte que le dispositif de liaison ainsi réalisé est silencieux.

L'invention n'est pas limitée à l'exemple décrit ci dessus, mais en englobe toutes les variantes. En particulier, au lieu de fixer le clip 7 ou 37 à la patte d'armature 2 de l'assise 1 et la barrette 4 à l'embase 5, il est possible de fixer le clip 7 ou 37 à l'embase 5 et la barrette 4 à l'armature de l'assise 1. Pour chaque dispositif de liaison de l'assise 1 à l'embase 5, on a décrit un clip 7 ou 37 coopérant avec une barrette 4. Mais la barrette 4 peut être une tige allongée, sur laquelle se montent plusieurs clips tels que 7 ou 37, ou au contraire la barrette 4 peut être formée de plusieurs éléments de barrette coaxiaux, sur lesquels se monte un seul clip. En outre, le corps du clip a une base en forme de queue d'aronde qui facilite sa fixation sur l'un des deux éléments à relier, grâce à deux portions tubulaires présentant simultanément les avantages de donner une bonne rigidité à cette base, d'économiser de la matière et de se prêter favorablement à une fabrication par moulage par injection de matière plastique en pièces à épaisseur sensiblement constante, mais d'autres réalisations de la base sont possibles.

## Revendications

1. Clip (7, 37) de fixation à manoeuvre manuelle pour relier entre eux de manière amovible et pivotante deux éléments (1, 5) dont l'un (1) porte ledit clip (7, 37) et l'autre (5) une barrette d'ancrage (4), formant axe de pivot, destinée à coopérer avec le clip (7, 37),
caractérisé en ce qu'il comprend, d'une part, un corps (8) relativement rigide présentant un premier logement (15, 45) destiné à recevoir la barrette d'ancrage (4) et ouvert vers l'extérieur du corps (8) par une première fente de pincement élastique (16, 44) s'élargissant vers l'extérieur du corps (8) et délimitée entre deux lèvres (11, 12 ; 40, 42) du corps, dont une première (11, 42) est élastiquement flexible, et, d'autre part, un organe (22, 60) mobile entre une position de verrouillage et une position de déverrouillage de la barrette d'ancrage (4) dans le premier logement (15, 45), positions dont l'une est une position de repos et l'autre une position active de l'organe mobile (22, 60) qui est lié au corps (8) par des moyens souples (23, 62), et déplaçable manuellement au moins de sa position de repos, dans laquelle il est à l'extérieur du corps (8), à sa position active par engagement à force dans une fente de pincement élastique (16, 46) s'élargissant également vers l'extérieur du corps (8) et également délimitée entre deux lèvres du corps dont l'une est ladite lèvre (11, 42) flexible, l'ensemble étant agencé de façon telle que l'engagement à force de la barrette (4) dans la première fente (16, 44) de pincement élastique, lorsque l'organe mobile (22, 60) n'est pas en position active, peut repousser suffisamment la lèvre flexible (11, 42) pour autoriser l'introduction de la barrette (4) dans le premier logement (15, 45), dans une position autorisant un pivotement relatif du clip (7, 37) et de la barrette (4), et dans laquelle la barrette (4) tend à être retenue par un retour élastique consécutif de la lèvre flexible (11, 42), et qu'ensuite l'engagement à force de l'organe mobile (22, 60) dans la fente de pincement élastique (16, 46) qui le reçoit peut repousser suffisamment la lèvre flexible (11, 42) pour autoriser la venue de l'organe mobile (22, 60) dans sa position active, dans laquelle il tend à être retenu par un retour élastique consécutif de la lèvre flexible (11, 42).

2. Clip selon la revendication 1, caractérisé en ce que le corps (8) présente un évidement central en U (14), dont le fond constitue le premier logement (15), et la lèvre flexible (11) s'étend d'une première extrémité, raccordée à une paroi rigide (10) du corps (8), à son autre extrémité (13), qui est libre, et est, en sa position de repos, inclinée de sorte que sa dite extrémité libre (13) est dirigée vers la seconde lèvre (12) de la première fente de pincement élastique (16) et vers l'intérieur de l'évidement (14) en direction du premier logement (15), de sorte qu'au passage de la barrette (4) dans la première fente de pincement élastique (16), la lèvre flexible (11) est repoussée vers la paroi (10) et que son extrémité libre (13) constitue, dans sa position de repos, un moyen de verrouillage s'opposant à la sortie de la barrette (4) hors du premier logement (15), et en ce que l'organe mobile (22), au repos en position de verrouillage de la barrette (4), est déplacé dans sa position active, qui est une position de déverrouillage de la barrette (4), par engagement dans ladite première fente de pincement élastique (16) de sorte qu'il repousse suffisamment la lèvre flexible (11) vers la paroi (10) pour que la barrette (4) puisse s'engager, à partir du premier logement (15), entre les deux lèvres (11, 12) de ladite première fente de pincement élastique (16) et soit ainsi autorisée à sortir du premier logement (15) et du clip (7) par glissement dans la première fente de pincement élastique (16).

3. Clip selon la revendication 1, caractérisé en ce que le corps (8) présente un second logement (47), destiné à recevoir l'organe mobile (60), et ouvert vers l'extérieur du corps (8) par une seconde fente de pincement élastique (46), la première lèvre (42), élastiquement flexible, s'étendant sensiblement entre une seconde (40) et une troisième (41) lèvres du corps (8) avec lesquelles elle délimite respectivement la première (44) et la seconde (46) fentes de pincement élastique, et en ce que l'organe mobile (60) est au repos en position de déverrouillage de la barrette (4), et en position active logé dans le second logement (47) dans une position de verrouillage de la barrette (4), de sorte que, par l'engagement à force de la barrette (4) dans la première fente de pincement élastique (44) et vers le premier logement (45), alors que l'organe mobile (60) n'est pas dans le second logement (47), la barrette (4) peut écarter suffisamment la lèvre flexible (42) de la seconde lèvre (40) pour entrer dans le premier logement (45), et qu'ensuite l'engagement à force de l'organe mobile (60) dans la seconde fente de pincement élastique (46) peut écarter suffisamment la lèvre flexible (42) de la troisième lèvre (41) pour autoriser l'introduction de l'organe mobile (60) dans le second logement (47), dans sa position active dans laquelle il maintient la lèvre flexible (42) dans une position telle qu'elle s'oppose rigidement à la sortie de la barrette (4) hors du premier logement (45), ladite barrette (4) ne pouvant sortir à force du premier logement (45) par action sur la lèvre flexible (42) qu'après la sortie à force de l'organe mobile (60) hors du second logement (47).

4. Clip selon l'une quelconque des revendications 1 à 3, caractérisé en ce que l'organe mobile est un barreau (22) allongé et rigide, sensiblement parallèle à la direction axiale de chaque logement (15, 45, 47), et présentant des extrémités longitudinales (22a, 22b ; 60a, 60b) en saillie axialement de part et d'autre du corps (8) du clip (7, 37), et par lesquelles le barreau (22, 60) est déplaçable au moins de l'une à l'autre de ses positions.

5. Clip selon la revendication 4, caractérisé en ce que les moyens souples de liaison de l'organe mobile (22, 60) au corps (8) comprennent deux languettes (23, 62) élastiquement déformables reliant chacune l'une des extrémités longitudinales (22a, 22b ; 60a, 60b) de l'organe mobile (12, 60) au corps (8), de manière à former un cadre qui chevauche au moins une partie du clip (7, 37).

6. Clip selon l'une quelconque des revendications 1 à 5, caractérisé en ce que le corps rigide (8) du clip (7, 37) a sensiblement la forme d'un profilé en U, dont les ailes, constituant l'une au moins des lèvres (12, 40, 41), sont solidaires d'une base (9), dont la face interne délimite au moins en partie le premier logement (15, 45), la face extérieure de ladite base (9) présentant des portions tubulaires (9a, 9b) en saillie par rapport aux faces externes desdites ailes, portions (9a, 9b) formant queue d'aronde pour le montage du clip (7, 37), et dont l'une (9b) est axialement prolongée par au moins une partie d'ancrage (24, 63) des moyens souples (23, 62) de liaison de l'organe mobile (22, 60) au corps (8) du clip (7, 37).

7. Clip selon l'une quelconque des revendications 1 à 6, caractérisé en ce qu'il est réalisé en une matière plastique, de préférence en polyamide.

8. Dispositif de liaison amovible et pivotante d'une assise (1) relevable de siège de véhicule sur une embase (5) liée à la caisse dudit véhicule, comportant au moins une barrette d'ancrage (4), destinée à être fixée sur l'un des deux éléments que sont ladite embase (5) et une armature de ladite assise (1), et au moins un organe (7, 37) destiné à être fixé sur l'autre des deux éléments et monté amovible et pivotant sur ladite barrette d'ancrage (4), formant axe de pivot, caractérisé en ce que ledit organe est un clip (7, 37) selon l'une quelconque des revendications 1 à 7 précédentes.

9. Dispositif selon la revendication 8, caractérisé en ce que la barrette d'ancrage (4) est fixée rigidement sur la caisse, et en ce que le clip (7, 37) est fixé sur une patte (2) d'armature de l'assise (1).

10. Dispositif selon la revendication 9, caractérisé en ce que le clip (7, 37) est fixé par coulissement d'une partie (9) de son corps (8), en queue d'aronde, dans un canal profilé (3) ménagé dans la patte d'armature (2), et se resserrant élastiquement autour du clip (7, 37).

## Patentansprüche

1. Handbetätigter Befestigungsclip (7, 37) zum gegenseitigen lösbaren und schwenkbaren Verbinden von zwei Elementen (1, 5), von denen das Element (1) den Clip (7, 37) und das andere Element (5) eine Verankerungsstange (4) trägt, die eine Schwenkachse bildet und dazu dient, mit dem Clip (7, 37) zusammenzuwirken, dadurch gekennzeichnet, daß der Clip aus folgenden Teilen besteht: einerseits einem relativ starren Körper (8), der ein erstes Lager (15, 45) aufweist, das dazu dient, die Verankerungsstange (4) aufzunehmen und zur Außenseite des Körpers (8) über einen ersten elastischen Quetschschlitz (16, 44) offen ist, der sich zum Äußeren des Körpers (8) erweitert und von zwei Lippen (11, 12; 40, 42) des Körpers begrenzt wird, von denen eine Lippe (11, 42) elastisch biegsam ist, und andererseits einem Organ (22, 60), das zwischen einer Verriegelungsstellung und einer Entriegelungsstellung der Verankerungsstange (4) in dem ersten Lager (15, 45) beweglich ist, wobei eine der Stellungen eine Ruhestellung und die andere Stellung eine aktive Stellung des beweglichen Organs (22, 60) darstellt, das mit dem Körper (8) über nachgiebige Mittel (23, 62) verbunden ist und manuell wenigstens aus seiner Ruhestellung, in der es sich außerhalb des Körpers (8) befindet, in seine aktive Stellung verschiebbar ist, indem es unter Kraftaufwand in einen elastischen Quetschschlitz (16, 46) eingeführt wird, der sich auch zum Äußeren des Körpers (8) verbreitert und ebenfalls von zwei Lippen des Körpers begrenzt wird, von denen eine die biegsame Lippe (11, 42) ist, wobei die Anordnung so konstruiert ist, daß das Einführen der Stange (4) in den ersten elastischen Quetschschlitz (16, 44), wenn das bewegliche Organ (22, 60) nicht in der aktiven Stellung ist, die biegsame Lippe (11, 42) ausreichend zurückstoßen kann, um den Eintritt der Stange (4) in das erste Lager (15, 45) in eine Stellung zuzulassen, die eine relative Verschwenkung des Clips (7, 37) und der Stange (4) zuläßt und in der die Stange (4) durch eine anschließende elastische Rückbewegung der biegsamen Lippe (11, 42) zurückgehalten wird und daß anschließend durch das Einführen des beweglichen Organs (22, 60) unter Kraftaufwand iri der elastischen Quetschschlitz (16, 46), der es aufnimmt, die biegsame Lippe (11, 42) ausreichend zurückgedrückt werden kann, damit das bewegliche Organ (22, 60) in seine aktive Stellung gelangen kann, in der es durch eine nachfolgende elastische Rückbewegung der biegsamen Lippe (11, 42) zurückgehalten wird.

2. Clip nach Anspruch 1, dadurch gekennzeichnet, daß der Körper (8) eine mittlere, U-förmige Ausnehmung (14) hat, deren Boden das erste Lager (15) bildet und die biegsame Lippe (11) sich von einem ersten Ende, das mit der starren Wandung (10) des körpers (8) verbunden ist, zu ihrem zweiten Ende (13) erstreckt, das ein freies Ende ist und in der Ruhestellung derart geneigt verläuft, daß das freie Ende (13) auf die zweite Lippe (12) des ersten elastischen Quetschschlitzes (16) und zum Inneren der Ausnehmung (14) in Richtung des ersten Lagers (15) gerichtet ist, so daß beim Durchgang der Stange (4) durch den ersten elastischen Quetschschlitz (16) die biegsame Lippe (11) gegen die Wandung (10) zurückgedrückt wird, und daß ihr freies Ende (13) in der Ruhestellung ein Verriegelungsmittel bildet, das dem Austritl der Stange (4) aus dem ersten Lager (15) entgegenwirkt, und daß das bewegliche Organ (22), das sich in der Verriegelungsstellung der Stange (4) in der Ruhestellung befindet, in seine aktive Stellung, die eine Stellung für die Entriegelung der Stange (4) ist, durch Hineinfahren in den ersten elastischen Quetschschlitz (16) verschoben wird, derart, daß das Organ die biegsame Lippe ausreichend in Richtung der Wand (10) zurückdrückt, damit sich die Stange (4) von dem ersten Lager (15) aus zwischen die beiden Lippen (11, 12) des ersten elastischen Quetschschlitzes (16) schieben kann und damit in der Lage ist, aus dem ersten Lager (15) und dem Clip (7) auszutreten, indem sie in dem ersten elastischen Quetschschlitz (16) gleitet.

3. Clip nach Anspruch 1, dadurch gekennzeichnet, daß der Körper (8) ein zweites Lager (47) zur Aufnahme des beweglichen Organs (60) aufweist, das zum Äußeren des Körpers (8) über einen zweiten Quetschschlitz (46) offen ist, wobei die erste, elastisch biegsame Lippe (42) sich im wesentlichen zwischen einer zweiten Lippe (40) und einer dritten Lippe (41) des Körpers (8) erstreckt, mit denen sie den ersten Quetschschlitz (44) bzw. den zweiten Quetschschlitz (46) begrenzt, und daß das bewegliche Organ (60) im Ruhezustand in der Entriegelungsstellung der Stange (4) ist und in der aktiven Stellung in dem zweiten Lager (47) in einer Verriegelungsstellung der Stange gelagert ist, derart, daß durch Eindrücken der Stange (4) unter Kraftaufwand in den ersten elastischen Quetschschlitz (44) und in Richtung des ersten Lagers (45), während das bewegliche Organ (60) sich nicht in dem zweiten Lager (47) befindet, die Stange (4) die biegsame Lippe (42) ausreichend von der zweiten Lippe (40) entfernen kann, um in das erste Lager (45) einzutreten, und daß anschließend beim Eindrücken des beweglichen Organs (60) unter Kraftaufwand in den zweiten elastischen Quetschschlitz (46) die biegsame Lippe (42) ausreichend von der dritten Lippe (41) entfernt werden kann, um das Eintreten des beweglichen Organs (60) in das zweite Lager (47) in seine aktive Stellung zu gestatten, in der es die biegsame Lippe (42) in einer Stellung hält, in der sie dem Austritt der Stange (4) aus dem Lager (45) starr entgegenwirkt, wobei die Stange (4) nur unter Kraftaufwand aus dem ersten Lager (45) durch Betätigung der biegsamen Lippe (42) austreten kann, nachdem das bewegliche Organ (60) aus dem zweiten Lager (47) ausgetreten ist.

4. Clip nach einem der Ansprüche 1 bis 3, dadurch gekennzeichnet, daß das bewegliche Organ eine längliche und starre Stange (22) ist, die im wesentlichen parallel zur axialen Richtung jedes Lagers (15, 45, 47) verläuft und in Längsrichtung verlaufende Enden (22a, 22b; 60a, 60b) aufweist, die axial beidseitig gegenüber dem Körper (8) des Clips (7, 37) vorstehen und mittels denen die Stange (22, 60) wenigstens von der einen in die andere Stellung verschiebbar ist.

5. Clip nach Anspruch 4, dadurch gekennzeichnet, daß die nachgiebigen Mittel zur Verbindung des beweglichen Organs (22, 60) mit dem Körper (8) aus zwei Zungen (23, 62) bestehen, die elastisch verformbar sind, wobei jede Zunge ein in Längsrichtung verlaufendes Ende (22a, 22b; 60a, 60b) des beweglichen Organs (22, 60) mit dem Körper (8) verbindet, derart, daß ein Rahmen gebildet wird, der wenigstens einen Teil des Clips (7, 37) überlappt.

6. Clip nach einem der Ansprüche 1 bis 5, dadurch gekennzeichnet, daß der starre Körper (8) des Clips (7, 37) im wesentlichen die Form eines U-Profils aufweist, dessen Schenkel, die wenigstens eine der Lippen (12, 40, 41) bilden, mit einer Basis (9) verbunden sind, deren innere Oberfläche wenidstens teilweise das erste Lager (15, 45) begrenzt, wobei die äußere Oberfläche der Basis (9) rohrförmige Abschnitte (9a, 9b) aufweist, die gegenüber den äußeren Oberflächen der Schenkel vorstehen, und schwalbenschwanzförmige Abschnitte für die Montage des Clips (7, 37) bilden und wobei der rohrförmige Abschnitt (9b) in axialer Richtung durch wenigstens ein Verriegelungsteil (24, 63) der nachgiebigen Mittel (23, 62) der Verbindung des beweglichen Organs (22, 60) mit dem Körper (8) des Clips (7, 37) verlängert ist.

7. Clip nach einem der Ansprüche 1 bis 6, dadurch gekennzeichnet, daß er aus Kunststoff, vorzugsweise aus Polyamid, besteht.

8. Vorrichtung zur lösbaren und schwenkbaren Verbindung des Sitzteils (1) eines Kraftfahrzeugsitzes, das an einem Gestell (5), das mit dem Chassis des Fahrzeuges verbunden ist, klappbar ist, bestehend aus wenigstens einer Verankerungsstange (4), die an einem von zwei Elementen, dem Gestell (5) der einer Armatur des Sitzteils (1) befestigbar ist und wenigstens einem Organ (7, 37), das an dem anderen der beiden Elemente anbringbar ist und abnehmbar und schwenkbar an der Verankerungsstange (4) befestigt ist, die die Schwenkachse bildet, dadurch gekennzeichnet, daß das Organ ein Clip (7, 37) gemäß einem der vorhergehenden Ansprüche 1 bis 7 ist.

9. Vorrichtung nach Anspruch 8, dadurch gekennzeichnet, daß die Verankerungsstange (4) starr mit dem Chassis verbunden und der Clip (7, 37) an einer Lasche (2) der Armatur des Sitzteils (1) befestigt ist.

10. Vorrichtung nach Anspruch 9, dadurch gekennzeichnet, daß der Clip (7, 37) durch Aufschieben eines schwalbenschwanzförmigen Abschnittes (9) seines Körpers (8) auf einen profilierten Kanal (3) befestigt ist, der in der Lasche (2) der Armatur ausgebildet ist und sich elastisch um den Clip (7, 37) erstreckt.

## Claims

1. Manually operated fixing clip (7, 37) for joining together removably and so that they can pivot two elements (1, 5), one (1) of which carries the said clip (7, 37) and the other (5) of which carries an anchoring rod (4), forming a pivot pin, and intended to interact with the clip (7, 37), characterized in that it comprises, on the one hand, a relatively rigid body (8) having a first housing (15, 45) intended to receive the anchoring rod (4) and open towards the outside of the body (8) via a first elastic pinching slit (16, 44) widening towards the outside of the body (8) and delimited between two lips (11, 12; 40, 42) of the body, a first (11, 42) of which is elastically flexible and, on the other hand, a member (22, 60) which can move between a position for locking and a position for unlocking the anchoring rod (4) in the first housing (15, 45), of which positions one is a rest position and the other an active position of the movable member (22, 60) which is connected to the body (8) by flexible means (23, 62) and can be moved manually at least from its rest position, in which it is outside the body (8), to its active position by forcible engagement in an elastic pinching slit (16, 46) also widening towards the outside of the body (8) and also delimited between two lips of the body one of which is the said flexible lip (11, 42), the assembly being arranged in such a fashion that the forcible engagement of the rod (4) in the first elastic pinching slit (16, 44) when the movable member (22, 60) is not in the active position, can sufficiently push back the flexible lip (11, 42) to allow the rod (4) to be inserted into the first housing (15, 45) in a position allowing a relative pivoting of the clip (7, 37) and of the rod (4), and in which the rod (4) tends to be retained by a subsequent elastic return of the flexible lip (11, 42) and that next, the forcible engagement of the movable member (22, 60) in the elastic pinching slit (16, 46) which receives it can sufficiently push back the flexible lip (11, 42) to allow the movable member (22, 60) to come into its active position, in which it tends to be retained by an elastic return following the flexible lip (11, 42).

2. Clip according to Claim 1, characterized in that the body (8) has a U-shaped central recess (14), the bottom of which constitutes the first housing (15), and the flexible lip (11) extends from a first end, joined to a rigid wall (10) of the body (8) to its other end (13) which is free and is, in its rest position, inclined such that its said free end (13) points towards the second lip (12) of the first elastic pinching slit (16) and towards the inside of the recess (14) towards the first housing (15) so that when the rod (4) passes into the first elastic pinching slit (16), the flexible lip (11) is pushed back towards the wall (10) and that its free end (13) constitutes, in its rest position, a locking means opposing the exit of the rod (4) from the first housing (15), and in that the movable member (22), at rest in the position for locking the rod (4), is moved into its active position, which is a position for unlocking the rod (4) by engagement in the said first elastic pinching slit (16) so that it pushes back the flexible lip (11) sufficiently towards the wall (10) for the rod (4) to be able to engage, from the first housing (15), between the two lips (11, 12) of the said first elastic pinching slit (16) and is thus allowed to leave the first housing (15) and the clip (7) by sliding in the first elastic pinching slit (16).

3. Clip according to Claim 1, characterized in that the body (8), has a second housing (47), intended to receive the movable member (60), and open towards the outside of the body (8) via a second elastic pinching slit (46), the first elastically flexible lip (42) extending substantially between a second (40) and a third (41) lip of the body (8) with which it respectively delimits the first (44) and the second (46) elastic pinching slits, and in that the movable member (60) is, at rest, in the position for unlocking the rod (4) and, in the active position, is housed in the second housing (47) in a position for locking the rod (4) so that, through the forcible engagement of the rod (4) in the first elastic pinching slit (44) and towards the first housing (45) while the movable member (60) is not in the second housing (47), the rod (4) can move the flexible lip (42) sufficiently away from the second lip (40) to enter the first housing (45), and so that next, the forcible engagement of the movable member (60) in the second elastic pinching slit (46) can move the flexible lip (42) sufficiently away from the third lip (41) to allow the movable member (60) to be inserted into the second housing (47) in its active position in which it holds the flexible lip (42) in a position such that it rigidly opposes the exit of the rod (4) out of the first housing (45), the said rod (4) being able to leave the first housing (45) forcibly by action on the flexible lip (42) only after the forcible exit of the movable member (60) out of the second housing (47).

4. Clip according to Claim 1, characterized in that the movable member is an elongate and rigid bar (22) substantially parallel to the axial direction of each housing (15, 45, 47) and having longitudinal ends (22a, 22b; 60a, 60b) projecting axially on either side of the body (8) of the clip (7, 37) and via which the bar (22, 60) can be moved at least from one to the other of its positions.

5. Clip according to Claim 4, characterized in that the flexible means for connecting the movable member (22, 60) to the body (8) comprise two elastically deformable tags (23, 62) each connecting one of the longitudinal ends (22a, 22b; 60a, 60b) of the movable member (12, 60) to the body (8) in a way so as to form a frame which straddles at least part of the clip (7, 37).

6. Clip according to Claim 1, characterized in that the rigid body (8) of the clip (7, 37) has substantially the shape of a U-section, the wings of which, constituting at least one of the lips (12, 40, 41) are secured to a base (9) the internal face of which delimits at least in part the first housing (15, 45), the external face of the said base (9) having tubular portions (9a, 9b) projecting with respect to the external faces of the said wings, the portions (9a, 9b) forming a dovetail for fitting the clip (7, 37), and one (9b) of which is extended axially by at least one part (24, 63) for anchoring the flexible means (23, 62) for connecting the movable member (22, 60) to the body (8) of the clip (7, 37).

7. Clip according to Claim 1, characterized in that it is produced from a plastic, preferably from polyamide.

8. Device for the removable and pivoting connection of a raisable vehicle seat cushion (1) on a base (5) connected to the body of said vehicle, including at least one anchoring rod (4) intended to be fixed on one of the two elements which are the said base (5) and a framework of the said seat cushion (1), and at least one member (7, 37) intended to be fixed on the other of the two elements and mounted removably and so that it can pivot on the said anchoring rod (4), forming a pivot pin, characterized in that the said member is a clip (7, 37) according to the preceding Claim 1.

9. Device according to Claim 8, characterized in that the anchoring rod (4) is fixed rigidly to the body, and in that the clip (7, 37) is fixed to a framework tab (2) of the seat cushion (1).

10. Device according to Claim 9, characterized in that the clip (7, 37) is fixed by a dovetail-shaped part (9) of its body (8) sliding in a profiled channel (3) formed in the framework tab (2), and clamping elastically round the clip (7, 37).
